# EUROPEAN PATENT APPLICATION

(11) **EP 2 433 701 A1**
(43) Date of publication of application: **28.03.2012**
(21) Application number: 10180098.5
(22) Date of filing: 27.09.2010
(51) Int. Cl.: B01D 53/86, B01F 5/06, B03C 3/36

(54) **Gas flow control arrangement**

(71) Applicant: Alstom Technology Ltd, 5400 Baden (CH)
(72) Inventor: Hjelmberg, Anders Erik, 352 44, Växjö (SE); Tabikh, Ali Mustapha, 352 53, Växjö (SE)
(74) Representative: Jacobsson, Peter

(57) **Abstract**

A gas flow control arrangement for use in an exhaust gas cleaning system, comprising a duct (20) through which flue gases flow from a first end (20a) toward a second end (20b). The duct is configured to have a longitudinal expanse between its first end and its second end, and a gas flow control device (80) arranged therein. The gas flow control device further comprises at least one expanded screen (81, 82, 83, 84) arranged at an angle within the duct to distribute gas flow. A method for controlling gas flow in an exhaust gas cleaning system is also described.

## Description

### Technical field

The present disclosure relates to a gas cleaning system, such as a catalytic reduction system or an electrostatic precipitator system, for use in an industrial process plant, such as a fossil-fueled power plant or a waste incineration plant. More particularly, the present disclosure relates to a gas flow control arrangement for use in an exhaust gas cleaning system. The subject gas flow control arrangement comprises: a duct through which exhaust gases flow from a first end toward a second end with a gas flow control device arranged therein.

### Background

In the combustion of a fuel, such as coal, oil, peat, waste, etc. in an industrial process plant, such as a fossil-fuelled power plant, a hot process gas is generated, such process gas containing, among other components, dust particles, sometimes referred to as fly ash, and nitrogen oxides. The dust particles are often removed from the process gas by means of a dust removal device, such as an electrostatic precipitator, also called an ESP, or a fabric filter. An ESP system is described in US4502872, incorporated herein in its entirety by reference.

Such an industrial process plant may also have a selective catalytic reduction (SCR) reactor, in which a catalytically induced selective reduction of the nitrogen oxides in the process gas occurs. An SCR system is described in WO 2005/114053 and in US 5687656, incorporated herein in entirety by reference. The ESP system and the SCR reactor are examples of gas cleaning devices in a gas cleaning system for use in an industrial process plant.

An object of gas cleaning systems is to treat the process gas so as to clean, e.g., remove/reduce dust particles, nitrogen oxides, and the like, the process gas as efficiently as possible. For the cleaning to be as efficient as possible, the process gas needs to be treated in some way before it reaches the gas cleaning device.

US2009/0103393 describes a static mixer useful for mixing a secondary fluid into a first fluid or gas, or for homogenization of a gas for temperature and/or concentration balance. The static mixer includes two vane pairs to be placed in a flue gas tube for generating a "swirl" in the otherwise linear flow of process gas. A relatively long expanse of duct is required downstream of the static mixer in order to achieve the desired mixing or homogenization effect. Especially in large, process plant-sized ducts, a long expanse of duct correlates to a considerable amount of material and capital expense. Further, such a static mixer causes an undesirable pressure drop.

System pressure drops are undesirable since such pressure drops cause more energy to be needed to achieve a particular required or desired gas flow velocity. Further, a pressure drop results in lower gas flow velocity, which results in less efficient mixing. Pressure drops in a gas cleaning system are generally caused when the process gas flow needs to be deflected or redirected from one duct to another. An example of such a necessary process gas flow deflection is when a cleaning device is bypassed during a part of the process gas cleaning process. Therefore, there is a need in such systems for a device that causes less of a pressure drop during flow deflection of a process gas than that of the prior art.

Consequently, there is a need for another device for efficiently controlling process gas flow through a process gas cleaning system that reduces or eliminates the above-mentioned drawbacks.

### Summary

The present disclosure provides a gas flow control arrangement that alleviates at least some of the fore mentioned drawbacks associated with present gas flow control arrangements.

According to the present disclosure, there is provided a gas flow control arrangement for use in an exhaust/process gas cleaning system.

The subject gas flow control arrangement comprises a duct through which flue gases flow from a first end toward a second end, the duct having a longitudinal expanse between its first end and its second end, with a gas flow control device arranged therein. Along the duct's longitudinal expanse is a transverse duct plane (A) perpendicular to the duct's longitudinal expanse. The expanded screen forms a screen plane (P) that extends between its first peripheral edge and its second peripheral edge. The screen plane is positioned at angle (α) with respect to transverse duct plane (A).

An expanded screen suitable for use in the subject arrangement is defined as a planar sheet of a substantially plastic deformable material with a plurality of apertures formed there through substantially perpendicular to the plane thereof.

By using one or more expanded screens in the subject gas flow control device, arranged as described above, process gas may be mixed such that an even distribution of particles within the process gas is achieved. A more even distribution of particles within the process gas allows for a more efficient cleaning process. The gas flow control arrangement may thereby function as a static mixer. Further, by using one or more expanded screens instead of solid plates or vanes as described in US2009/0103393, the mixing of process gas may occur just downstream of and adjacent to the screens, thereby requiring a shorter duct length to accomplish such mixing. Shorter length ducts require less material for construction. Consequently, the ducts become lighter and less expensive to construct and maintain. Further, unlike solid plates or vanes, process gas may flow not only around the subject expanded screens, but also may flow through the expanded screens, reducing the associated undesirable pressure drop discussed above. A reduction of pressure drop correlates with lower energy requirements/consumption to move process gas through the system. The velocity of the process gas flow through the system may also be kept more consistent throughout the cleaning system. Further, the velocity of the process gas flow through the system may be maintained more uniform across the entire cross-section of the duct. Further, less material may be needed for producing an expanded screen as compared to that needed for producing a solid plate or vane, thus providing a more cost-effective gas flow control device. Material demands may be less for the whole gas flow control arrangement, making the cleaning system lighter, less expensive to operate and maintain, and more compact. By arranging the expanded screens at an angle transverse or across the hollow interior of the duct, mixing of process gas may be more efficient and cost-effective. Further, process gas flow through the system may be directed as desired for the specific cleaning process required.

According to one embodiment, the angle (α) between the screen plane and the transverse duct plane is between 10 and 80 degrees. The angle (α) may be between 15 and 60 degrees. Thereby, efficient process gas mixing may be achieved downstream from and directly adjacent to the gas flow control arrangement. Process gas may flow around and/or through the expanded screens and mix as described above. The velocity of the process gas flow through the system may be more consistent throughout the cleaning system and more uniform across the entire cross-section of the duct, when the screen plane of the at least one expanded screen has an angle of at least 10 degrees with respect to the transverse duct plane.

In a further aspect, the at least one expanded screen may be made of metal. By using a metal to construct the expanded screen, a robust screen may be achieved with a long working lifetime. Examples of suitable metals for construction of expanded screens are tempered sheet-metals such as sheet iron e.g. Hardox™ (SSAB Svenskt Stal Aktiebolag Corporation, Sweden), or stainless materials, especially desirable for use in corrosive environments. Expanded screens may be made of many different plastic deformable materials. Such plastic deformable material may be a kind of rigid plastic, such as Teflon™ (E.I. Du Pont De Nemours and Company Corporation, USA). Such a construction material may mainly be used for expanded screens used in an environment with special demands on cleanliness.

In an aspect, the at least one expanded screen comprises a first expanded screen (61; 81) and a second expanded screen (62; 82), wherein a first peripheral edge (61 a; 81 a) of the first screen is arranged in contact with a first peripheral edge (62a; 82a) of the second screen. By providing two expanded screens, mixing may be performed more efficiently since the two screens may be individually placed to direct the flow of process gas in different directions. At least a part of each of the expanded screens may be in parallel. Expanded screens placed in parallel are expanded screens positioned one above another for substantially the full height (H) of the duct. The screen planes of the expanded screens as defined by two opposing peripheral sides of each of the expanded screens as described above, may be positioned perpendicular to, parallel with or at an angle with respect to the longitudinal expanse of the duct. Such an arrangement affects a larger zone of the duct without drawbacks such as significant pressure loss.

In a further aspect, the second peripheral edge (61 b; 81 b) of the first screen is arranged spaced apart from the second peripheral edge (62b; 82b) of the second screen. Further, the first and second expanded screens may be straight, curved or bent and positioned within the duct so as to diverge from each other along the longitudinal expanse of the duct. In one such embodiment, a first peripheral edge of each of the first and second expanded screens is fixed at a point within a duct. One or both of the first and the second expanded screens may be curved to a like or unlike degree so as to position their respective second peripheral edges, opposed to the first peripheral edges, in closer proximity with an interior wall of the duct than that of their first peripheral edges. The second peripheral edges of both first and second expanded screens may thus be positioned in closer proximity with the same interior wall of the duct or differing or opposing interior walls of the duct.

In another embodiment, a first peripheral edge of each of the first and second expanded screens is fixed at a point within a duct. Their respective second peripheral edges, opposed to the first peripheral edges, are positioned apart from one another so each second peripheral edge abuts a different interior duct wall. The so abutted interior duct walls may oppose one another. The expanded screens may be planar, of a singular curve (arc), of multiple uniform or non-uniform curves (waves), of a singular bend, of multiple uniform or non-uniform bends or combinations thereof.

In another aspect, an expanded screen may comprise a number of individually curved strands. The strands may be angled or curved to allow process gas to flow therethrough and thereby change the flow of the process gas. Such a change in process gas flow may cause a mixing of the particles and the temperatures in the process gases.

In one aspect, the at least one expanded screen may have a bent shape from its first peripheral edge towards its second peripheral edge. Thereby, the expanded screen may provide different angles along the length thereof with respect to the transverse duct plane. This may further provide an efficient mixing with a relatively low pressure drop.

In a further aspect, the gas flow control device further may comprise a plurality of expanded screen pairs. By providing a plurality of expanded screen pairs a more efficient flue gas mixing and a more even flue gas distribution within the duct may be achieved. Each expanded screen pair may be arranged to occupy a part of a transverse cross-section of the duct's longitudinal expanse. Together, the plurality of screen pairs may occupy substantially the whole transverse cross-section of the duct's longitudinal expanse. Alternatively, the plurality of screen pairs may occupy only a part of the transverse cross-section of the duct's longitudinal expanse.

In a further aspect, first and second expanded screens may be at least partially in contact with each other. The two screens may together substantially occupy an entire transverse cross-section of the duct's longitudinal expanse. Thereby, the process gas may only flow through the expanded screens and not around them. The first and second expanded screens may be formed from two separate expanded screens by one single expanded screen that is bent or folded so as to provide two expanded screen portions. The two expanded screen portions may then serve as the first and the second expanded screens.

In yet another embodiment, the gas flow control device may comprise a first and a second expanded screen with each of their first peripheral edges positioned at a point relatively the same within the duct. The opposed second peripheral edges of each the first and second expanded screens are positioned apart from one another so as to abut opposing interior walls of the duct. The second peripheral edges are downstream with respect to the flow of process gas from the first peripheral edges.

According to another embodiment, at a desired distance downstream with respect to the flow of process gas from the first and second expanded screens is a third expanded screen and a fourth expanded screen with each of their second peripheral edges positioned at a point relatively the same within the duct. The opposed first peripheral edges of each of the third and fourth expanded screens are positioned apart from one another. The first peripheral edges are upstream with respect to the flow of process gas from the second peripheral edges. According to an embodiment, the first peripheral edges of each of the third and fourth expanded screens are arranged so as to abut opposing interior walls of the duct. Thereby, a zone between the two pairs of expanded screens may be formed. The zone may be provided as a mixing zone wherein gas particles are mixed to provide an even distribution of particles and gas temperatures. Such an arrangement of expanded screens may provide for a decreased pressure drop through the gas flow control arrangement over that of prior arrangements.

According to another aspect of the invention, an exhaust gas cleaning system for an industrial process plant such as a fossil-fueled power plant or a waste incineration plant is provided. The system comprises a gas cleaning device, a hollow inlet duct fluidly connected to the gas cleaning device to channel a flow of exhaust/process gases to the gas cleaning device, and a hollow outlet duct fluidly connected to the gas cleaning device to channel flowing process gases cleaned in the gas cleaning device out from the gas cleaning device. The system is characterized in that a gas flow control arrangement is positioned in the inlet duct. Thereby, a system may be provided that may mix process gases prior to the process gases flowing into the gas cleaning device. Well mixed process gases with an even distribution of particles and temperatures may enhance the performance of the cleaning device and extend the working lifetime of the cleaning device. Further, sufficient process gas mixing may make the cleaning process in the cleaning device more tolerant to variations in process gas conditions.

In one aspect, the exhaust gas cleaning system may further comprise an ammonium injection grid for injecting ammonium into a process gas flowing through inlet duct with the gas flow control arrangement arranged downstream of the ammonium injection grid. By arranging the gas flow control arrangement downstream of the ammonium injection grid, the expanded screen or screens of the gas flow control arrangement may function as a mixer to ensure an even distribution of ammonium in the process gas. Also, by such a measure, the number of nozzles in an ammonium injection grid may be reduced from typically around 100 to 160 down to around 30, while still achieving a good distribution of ammonium throughout the process gases. Further, by using fewer nozzles in the ammonium injection grid, less of a pressure drop may be realized over the ammonium injection grid. Still further, when using the subject gas flow arrangement, the nozzles of the ammonium injection grid may not have to be tuned as precisely as would need to be done without using the subject gas flow control arrangement. The reason for this is that the gas flow control arrangement may aid in mixing and distributing the ammonium in the process gases in such a manner that variations in the amount of ammonium flowing from each nozzle become irrelevant.

In another aspect, the exhaust gas cleaning system may comprise a hollow bypass duct fluidly connected to the inlet duct and to the outlet duct, for use in diverting process gases past the gas cleaning device. The gas flow control arrangement may be arranged at the bypass duct connection to the inlet duct. In other words, in a zone where the bypass duct is fluidly connected to the inlet duct. By so positioning the gas flow control arrangement comprising at least one expanded screen, a simultaneous mixing and turning of the process gas to flow into the bypass duct may be achieved. In addition, a lower pressure drop may be achieved over this gas flow control arrangement as compared to solid guide vanes. When the process gases are not bypassing the gas cleaning device, the gas flow control arrangement may function as a static mixer, enhancing the process gas mixing process prior to its flow to the cleaning device.

According to another aspect, a method for controlling gas flow in an exhaust gas cleaning system is described, comprising channeling gas flow through a duct from its first end towards its second end along the longitudinal expanse of the duct, using at least one expanded screen arranged in the duct, the expanded screen having a screen plane forming an angle with respect to transverse duct plane, to distribute gas flow.

According to an embodiment of the method for controlling gas flow in an exhaust gas cleaning system, the at least one expanded screen may comprise a first expanded screen and a second expanded screen, wherein a first peripheral edge of the first screen is arranged in contact with a first peripheral edge of the second screen. Further, a second peripheral edge of the first screen may be arranged spaced apart from a second peripheral edge of the second screen.

According to another embodiment of the method for controlling gas flow in an exhaust gas cleaning system, the at least one expanded screen has a bent shape or a straight shape from its first peripheral edge towards its second peripheral edge.

### Brief description of the drawings

The invention is described in still more detail with reference to the enclosed drawings, wherein:
Fig 1 is a schematic cross-sectional side view of a power station having an exhaust gas cleaning system in which the gas flow control arrangement according to the invention may be installed.
Fig. 2 is a schematic cross-sectional side view of a gas flow control arrangement according to a first embodiment of the invention.
Fig. 3 is a perspective view of the gas flow control device used in the gas flow control arrangement of Fig. 2.
Fig. 4a is an enlarged side view of the expanded screen used in the gas flow control device of Fig. 3.
Fig. 4b is a perspective view of an expanded screen according to an embodiment of the invention.
Fig. 5 is a schematic cross-sectional side view of a gas flow control arrangement of the invention installed downstream of an ammonium injection grid.
Fig. 6 is a schematic cross-sectional side view of a gas flow control arrangement of the invention installed in a zone where a bypass duct is connected to an SCR inlet duct.
Fig. 7 is a schematic cross-sectional side view of a gas flow control arrangement according to another embodiment of the invention.
Fig. 8 is a schematic cross-sectional end view of the gas flow control arrangement of Fig. 7 taken along line VIII -- VIII.

### Description of Embodiments

The present invention is described more fully hereinafter with reference to the accompanying drawings, in which preferred embodiments of the invention are shown. This invention may, however, be embodied in many different forms not limited to the embodiments set forth herein. The embodiments provided herein are intended to fully convey the spirit and scope of the invention to those skilled in the art. In the drawings, like numbers refer to like elements.

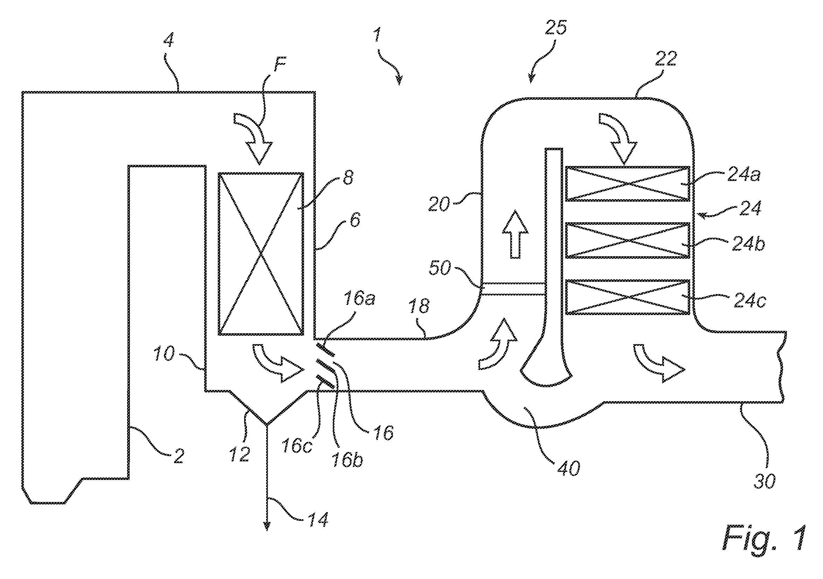

Fig. 1 illustrates a power station 1. The power station 1 has a boiler 2, in which a fuel, such as coal, oil or waste, is burnt while in contact with supplied air. Process/flue gases F and particles formed in the burning process within the boiler flow through duct 4 to a flue gas cooler 6, also referred to as an economizer. In the flue gas cooler 6, heat is extracted from the flue gases as they flow downward through a package of tubes 8. An exterior surface of tubes within the package of tubes 8 are in direct contact with feed water (not shown) from boiler 2. The flue gas cooler 6 includes a lower portion 10 with a dust hopper 12 for collection of at least some coarse particles. A discharge device 14 is used to remove such collected coarse particles. In the lower portion 10 of the flue gas cooler 6, flue gas flow changes from a downward flow to a horizontal flow through flue gas duct 18 prior to entering an exhaust gas cleaning system 25, in which a gas flow control arrangement according to the invention may be used.

The exhaust gas cleaning system 25 may comprise a flue gas duct 20. In flowing from flue gas duct 18 to fluidly connected flue gas duct 20, the flow of flue gas changes from a substantially horizontal flow to a substantially upward flow through flue gas duct 20. In flue gas duct 20, an ammonium injection grid 50 is arranged for injection of ammonium into the flue gas flowing upwardly through flue gas duct 20. The flow of flue gas then turns about 180 degrees to flow downwardly through flue gas duct 22. Within flue gas duct 22 is a Selective Catalytic Reduction (SCR) reactor 24, for selective catalytic reduction of flue gas nitrogen oxides. In the embodiment illustrated in Fig. 1, SCR reactor 24 has three catalyst layers, i.e. 24a, 24b and 24c, which contain a catalyst formed on a honeycomb structure or other such structure.

Flue gases flowing from SCR reactor 24 flow through output duct 30 and further cleaning as desired, for instance, in an electrostatic precipitator and a flue gas desulphurization plant, which are not shown in Fig. 1, prior to release into the atmosphere.

In the substantially horizontal flue gas duct 18, a baffle arrangement 16 is positioned so as to occupy substantially the entire height (H) of flue gas duct 18. The baffle arrangement 16 comprises a number of plates 16a, 16b and 16c positioned spaced apart one above another with parallel downwardly sloping with regard to the flow of flue gas opposed top and bottom surfaces, respectively. Baffle arrangement 16 cleans particles from the flue gas that may clog ducts in SCR reactor 24.

The exhaust gas cleaning system 25 further comprises a bypass duct 40 for bypassing the SCR reactor 24. The bypass duct 40 branches off at the intersection between horizontal flue gas duct 18 and vertical flue gas duct 20. Bypass duct 40 terminates in fluid connection with output duct 30. The SCR reactor 24 may for instance be bypassed by means of bypass duct 40 during a startup process of the exhaust gas cleaning system 25.

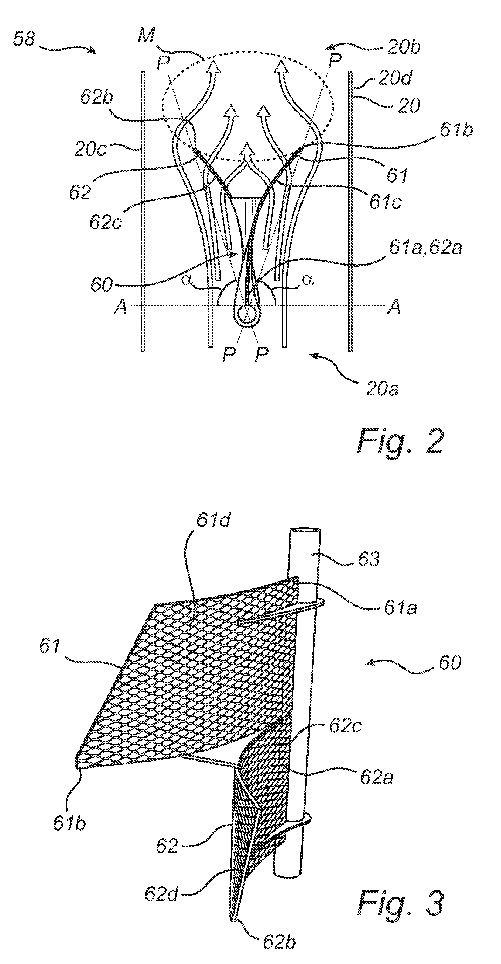

As illustrated in Fig. 2, a gas flow control arrangement 58 comprising a flow control device 60 may be positioned in many different places in a gas cleaning system 25, such as in the intersection between horizontal flue gas duct 18 and vertical flue gas duct 20, or downstream with respect to the flow of flue gases of ammonium injection grid 50.

The gas flow control device 60 may also be used in an electrostatic precipitator for mixing flue gases, directing flue gases and/or velocity distribution of flue gases.

Fig. 2 illustrates the placement and function of the gas flow control device 60 according to the invention. The gas flow control device 60 comprises a first curved expanded screen 61 and a second curved expanded screen 62. The expanded screens 61, 62 are located in a hollow flue gas duct fluidly connected to a power station, such as flue gas duct 20 of Fig. 1. As previously noted, vertical flue gas duct 20 has a first end 20a and a second end 20b with a longitudinal expanse therebetween. Within the longitudinal expanse of the flue gas duct 20, first peripheral edges 61 a, 62a of expanded screens 61, 62 are positioned at a point relatively near first end 20a of flue gas duct 20. As such, first peripheral edges 61 a, 62a are positioned closer to first end 20a of duct 20 than are second peripheral edges 61 b, 62b of expanded screens 61, 62. Expanded screens 61, 62 are curved to an arc of curvature. Second peripheral edges 61 b, 62b of expanded screens 61, 62 are positioned apart from one another so each second peripheral edge comes within closer proximity to, or alternatively abuts, a different opposed interior duct wall, 20c, 20d. A transverse duct plane A through flue gas duct 20 perpendicular to its longitudinal expanse is illustrated in Fig. 2 as a dotted line A-A. Each expanded screen 61, 62 has a screen plane P defined by extending from first peripheral edge 61 a, 62a to second peripheral edge 61 b, 62b. Each screen plane P is illustrated in figure 2 by a dotted line. Each of the screen planes P defines an angle α with respect to transverse duct plane A.

Angle α may vary as desired from around 30 to around 60 degrees or from around 30 to around 90 degrees, as long as both expanded screens 61, 62 do not in combination substantially obstruct flue gas duct 20.

Due to the arrangement of expanded screens 61, 62 in flue gas duct 20, the flow of process gas through flue gas duct 20 is disturbed such that the process gas flows in various directions through and around expanded screens 61, 62. Thereby, a more even velocity distribution is achieved through process gas mixing in a mixing zone (M) relatively near second peripheral edges 61 b, 62b of the expanded screens 61, 62 relatively near second end 20b of vertical flue gas duct 20. Because expanded screens 61, 62 are not solid screens, mixing zone M is located closer to the screens than if solid screens were to have been used. An effective and instant mixing of the particles in the process gas is provided in mixing zone M. With mixing zone M closer in proximity to expanded screens 61, 62, the required length of flue gas duct 20 is reduced. The process gas flow through gas flow control device 60 is maintained such that there is only a relatively small pressure drop in flue gas duct 20. If solid screens were to be used rather than expanded screens 61, 62, there would be a significantly larger pressure drop at the gas flow control device 60 in flue gas duct 20. A reduced pressure drop, means a higher process gas flow velocity, which correlates with better, more efficient mixing performance.

Fig. 3 illustrates the gas flow control device 60 in more detail comprising a mounting rod 63, onto which the first peripheral edge 61 a of expanded screen 61 and the first peripheral edge 62a of second expanded screen 62 are attached. Expanded screens 61, 62 are attached to mounting rod 63 in an unspaced manner one above the other. Mounting rod 63 is mounted in flue gas duct 20 so as to be perpendicular with respect to the longitudinal expanse of flue gas duct 20. The mounting rod 63 is attached to interior opposed walls of flue gas duct 20 relatively near first end 20a of the vertical flue gas duct 20. Expanded screens 61, 62 are each curved having an interior surface 61 c, 62c and an exterior surface 61 d, 62d. Curved expanded screens 61, 62 are positioned so that second peripheral edges 61 b, 62b are each spaced apart from each other and in closer proximity to interior duct walls 20c, 20d of flue gas duct 20 than are first peripheral edges 61 a, 62a. From first peripheral edge 61 a, 62a to second peripheral edge 61 b, 62b are screen planes P for expanded screens 61, 62. At first peripheral edge 61 a, 62a, a transverse duct plane (A) is taken across flue gas duct 20 perpendicular to its longitudinal expanse as illustrated by dotted line A-A in Fig. 2. Measuring from any point along screen plane P to transverse duct plane A, provides an angle α.

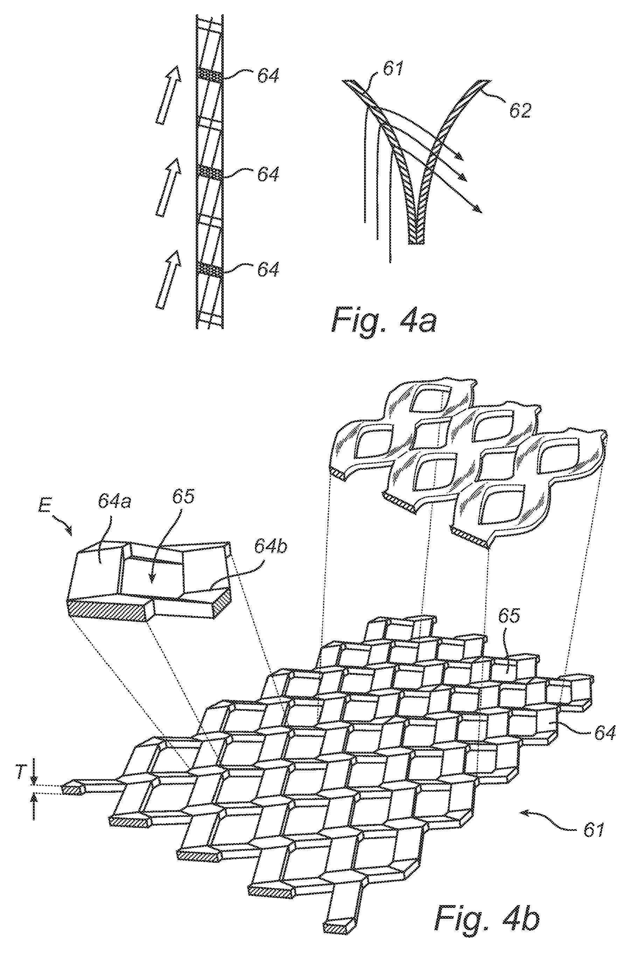

Figs. 4 a and b illustrates in more detail the structure of expanded screens 61, 62. Expanded screens 61, 62 are preferably made of sheet metal with perforations 65 cut through the thickness (T) thereof to form a plurality of intermittently connected strands 64. The sheet metal is then stretched thereby deforming the strands 64 and enlarging the perforations 65. The deformed strands 64 serve to change the direction of process gas flow as the process gas flows through the enlarged perforations 65 of expanded screens 61, 62. The change of process gas flow direction provides better mixing performance within gas flow control device 60.

For more detail, an expanded screen 61, 62, is produced using a shearing knife to create a pattern of cuts through the sheet material to be used to construct screens 61, 62 perpendicular with respect to the plane of the sheet material. While creating cuts or after cuts have been created, the sheet material is stretched, thus expanding the cuts and deforming the sheet material around the cuts made by the knife. The result is a pattern of angled strands with perforations or apertures between the angled strands.

As illustrated in Fig. 4b, expanded screen 61 comprises a pattern of angled strands 64 with perforations/apertures 65 between the angled strands 64. In other words, the angled strands 64 of the expanded screen 61 are intermittently angled with respect to the plane of the sheet material from which the expanded screen was made. These angled strands 64 give the expanded screen 61 desirable flue gas deflection properties as required for operation thereof as a static mixer as illustrated in Fig. 4a. A simple perforated plate for example would not have desirable gas deflection properties due to its lack of angled elements. Illustrated in Fig. 4b, expanded screen 61 comprises a plurality of elements E, each element E is made up of two angled strands 64a and 64b. One angled strand 64a is angled upwardly from the plane of the sheet material and the other angled strand 64b is angled downwardly from the plane of the sheet material. Together, angled strands 64a and 64b turn element E into somewhat of a loop with aperture 65 surrounded by angled strands 64a and 64b.

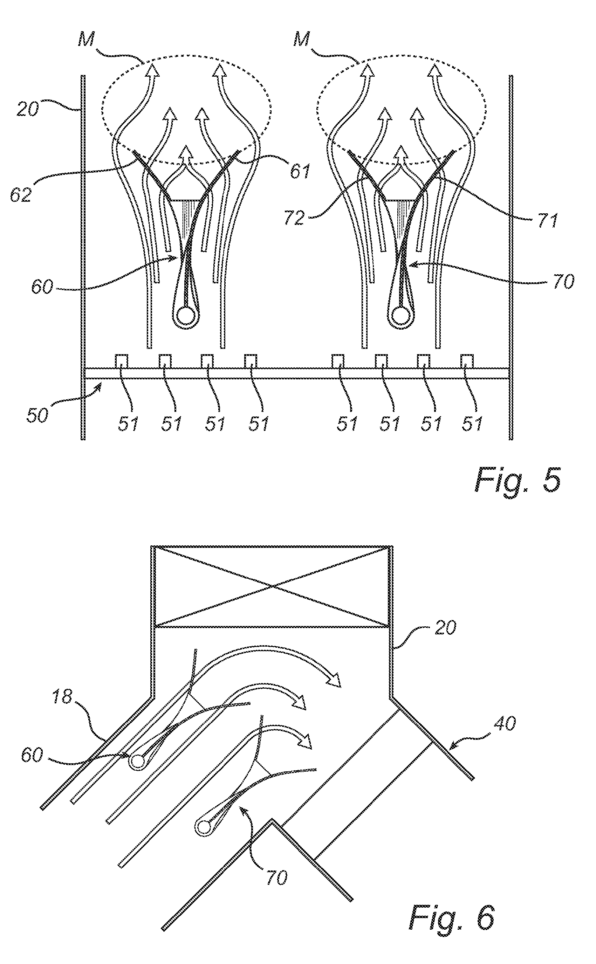

In the embodiment depicted in Fig. 5, two gas flow control devices 60, 70 according to the invention are located downstream of an ammonium injection grid 50 in a vertical flue gas duct 20. The ammonium injection grid 50 and the gas flow control devices 60, 70 are located upstream with regard to flue gas flow of a SCR. The ammonium injection grid 50 injects ammonium into the flowing process gas. The gas flow control devices 60, 70 then alter the process gas flow such that the ammonium gas is evenly distributed throughout the process gas. Without use of a gas flow control arrangement, such a system would need approximately 100 to160 nozzles 51 in the ammonium injection grid. Such a number of nozzles 51 would be necessary to obtain a relatively even distribution of ammonium throughout the process gas. An ammonium injection grid of approximately 100 to 160 nozzles is costly and requires precise tuning and control for proper function. It also causes a relatively high pressure drop in the flow of process gas. By providing a gas flow control arrangement according to the invention, with at least two gas flow control devices 60, 70 comprising expanded screens 61, 62, 71, 72 downstream with respect to the flow of process gas, of the ammonium injection grid 50, the number of nozzles 51 in the ammonium injection grid 50 may be significantly reduced. Rather than requiring approximately 100 to160 nozzles 51, about 30 nozzles 51 are sufficient to provide a relatively even distribution of ammonium throughout the process gas. Further, fewer nozzles 51 result in a lower pressure drop over the ammonium injection grid 50. Still further, nozzles 51 used with expanded screens 61, 62, 71, 72 do not have to be tuned as precisely as would be necessary if flue gas duct 20 did not have a gas flow control arrangement. Such is true since the gas flow control arrangement aids in thoroughly distributing the ammonium throughout the process gas such that differences in the amount of ammonium flowing from various nozzles 51 become irrelevant. Systems requiring fewer nozzles 51 are also more cost-effective. The same effect may be achieved using more than two gas flow control devices 60, 70, or using only one gas flow control device 60, 70. The gas flow control devices 60, 70 may be of different sizes and/or shapes. The gas flow control devices 60, 70 each occupy a portion of an area of duct 20 generally transverse or across the longitudinal expanse thereof. The two gas flow control devices 60, 70 could together occupy an entire area transverse or across the longitudinal expanse of duct 20.

Fig.6 illustrates a portion of a power station 1 according to Fig.1, comprising a hollow inlet duct 18, a hollow vertical flue gas duct 20 and a hollow bypass duct 40. Flue gas duct 20 enables process gas to flow from hollow inlet duct 18 toward the fluidly connected SCR 24. Upon some occasions in the process, the process gas flow needs to bypass the SCR. In such a case, process gas may be made to flow into fluidly connected bypass duct 40, as flue gas duct 20 is closed. Prior to the present invention, solid guide vanes have been used to channel process gas flow between flue gas duct 20 or bypass duct 40. Generally, such solid guide vanes cause a relatively high pressure drop upon process gas flow diversion for system bypass. Such is due to flue gas duct 20 closure to divert process gas flow to bypass duct 40. In the present solution, solid guide vanes are replaced by at least two gas flow control devices 60, 70 comprising expanded metal screens according to the invention. The gas flow control devices 60, 70 are positioned in inlet duct 18. The gas flow control devices 60, 70 provide mixing and velocity distribution of process gas flowing in the duct 18. When flue gas duct 20 is closed and bypass duct 40 opened, the shape and position of expanded screens 61, 62, 71, 72 provide process gas diversion into the bypass duct 40 with less pressure drop than with the use of solid vanes. During normal process gas flow toward the SCR, the gas flow control devices 60, 70 serve to enhance process gas mixing and velocity distribution prior to entering the SCR inlet. Thereby, the system is made more robust, since the system is less affected by/more tolerant to variations in SCR inlet conditions of the process gas.

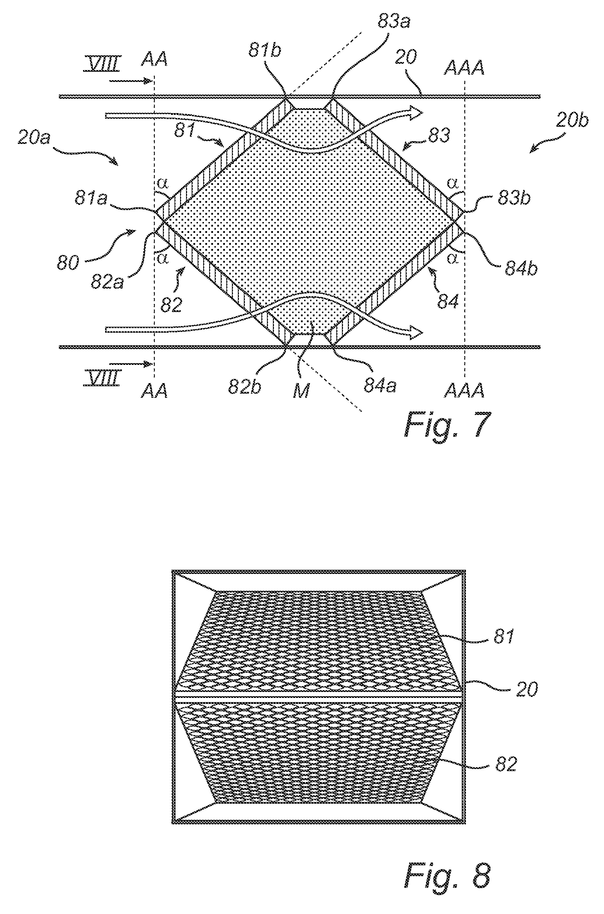

Figs. 7 and 8 illustrate still another alternative embodiment of the subject disclosure wherein vertical flue gas duct 20 comprises expanded metal screens 81, 82, 83, 84. A first pair of expanded metal screens 81, 82 is positioned with first peripheral edges 81 a, 82a each in contact with the other. Downstream with respect to the flow of process gas from first peripheral edges 81 a, 82a, are spaced apart second opposed peripheral edges 81 b, 82b. The second peripheral edges 81 b, 82b may be arranged to abut the internal wall of duct 20. A second pair of expanded metal screens 83, 84 is positioned downstream with respect to the flow of process gas from expanded screens 81, 82. First peripheral edges 83a, 84a are spaced apart from one another. The first peripheral edges 83a, 84a may be arranged to abut the internal wall of duct 20. Downstream with respect to the flow of process gas, second opposed peripheral edges 83b, 84b are positioned so each is in contact with the other. The expanded metal screens 81, 82, 83, 84 each have a screen plane P extending from first peripheral edges 81 a, 82a, 83a and 84a to second peripheral edges 81 b, 82b, 83b and 84b, respectively. Between the two pairs of screens 81, 82, 83, 84 is a mixing zone M. The particles carried in the process gas are evenly distributed throughout the process gas in the mixing zone M after passing through the first pair of expanded metal screens 81, 82. The gas then continues to flow through the second pair of expanded metal screens 83, 84. The first screen pair and/or the second screen pair may be formed by a single expanded screen folded to provide two screen portions positioned as illustrated in Figs. 7 and 8, with the two portions at an angle with respect to each other. At first peripheral edges 81 a, 82a, a plane (AA) extends through flue gas duct 20 perpendicular to its longitudinal expanse. At second peripheral edge 83b, 84b, a plane (AAA) extends through flue gas duct 20 perpendicular to its longitudinal expanse and parallel to plane AA. Screen planes P of expanded screens 81, 82 each form an angle α with respect to plane AA and screen planes P of expanded screens 83, 84, each form an angle α with respect to plane AAA. Angles α are diverted from zero degrees. Angles α are preferably in the range of about 15-60 degrees. Further, angles α for expanded screens 81, 82, 83, 84 could be different for each screen, or for each screen pair. The gas flow control device 80 as described in Fig. 7 may be placed adjacent to an ammonium injection grid 50 in an exhaust cleaning system 25 as described for the gas flow control devices 60, 70 in Fig. 5. Further, the gas flow control device 80 as described in Fig. 7 may be placed adjacent to a bypass duct 40 as described for the gas flow control devices 60, 70 in Fig. 6.

The gas flow control device 80 may in one embodiment comprise only the first screen pair 81, 82, i.e. the first expanded metal screen 81 and the second expanded metal screen 82. Such solution provides an even shorter gas flow control device 80, suitable in a shorter flue gas duct 20. Further, such gas flow control device 80 may be used as a solution to even out a skewed velocity profile in a flow of flue gas.

Fig. 8 depicts a cross-sectional end view of the vertical flue gas duct 20 of Fig. 7 taken along line VIII - VIII, illustrating the first pair of expanded metal screens 81, 82 arranged within flue gas duct 20.

By use of expanded screens in accordance with the present disclosure instead of solid screens, a more even distribution of process gas characteristics is achieved downstream with respect to the flow of process gas from the mixing zone, with less system weight and expense. Also, the vertical flue gas duct 20 may be constructed to have a relatively shorter longitudinal expanse since expanded screen flue gas mixing provides a relatively even distribution of process gas characteristics in a relatively shorter distance. Further, due to the use of expanded screens, the pressure drop in the vertical flue gas duct 20 is reduced and the gas flow control device occupies a smaller footprint within the duct. Since the process gas can flow through the expanded screens 81, 82, 83, 84, the velocity distribution throughout the process gas is improved as being more homogenous as compared to that achieved through mixing using solid vanes. Solid vanes cause flow rotation, making the mixing zone a low velocity zone. An improved velocity distribution in the process gas flow as disclosed herein enhances the overall performance of the mixing process.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A gas flow control arrangement for use in an exhaust gas cleaning system (25) comprising:
a duct (20) through which flue gases flow from a first end (20a) toward a second end (20b), the duct having a longitudinal expanse between its first end and its second end, with a gas flow control device (60; 70; 80) arranged therein, the duct having a transverse duct plane (A) perpendicular to its longitudinal expanse,
**characterized in that** the gas flow control device (60) comprises at least one expanded screen (61, 62; 81, 82) arranged in the duct (20), the expanded screen having a screen plane (P) forming an angle (α) with respect to transverse duct plane (A).

2. Gas flow control arrangement according to claim 1, wherein the angle (α) between the screen plane (P) and transverse duct plane (A) is 10 to 80 degrees.

3. Gas flow control arrangement according to claim 1 or 2, wherein the expanded screen is made of metal.

4. Gas flow control arrangement according to any of claims 1-3, wherein the at least one expanded screen comprises a first expanded screen (61; 81) and a second expanded screen (62; 82), wherein a first peripheral edge (61 a; 81 a) of the first screen is arranged in contact with a first peripheral edge (62a; 82a) of the second screen.

5. Gas flow control arrangement according to claim 4, wherein a second peripheral edge (61 b; 81 b) of the first screen is arranged spaced apart from a second peripheral edge (62b; 82b) of the second screen.

6. Gas flow control arrangement according to any of claims 1-5, wherein the at least one expanded screen (61, 62) comprises a number of angled strands (64), with each angled strand (64) having at least a portion thereof angled with respect to the plane of the expanded screen (61, 62).

7. Gas flow control arrangement according to any of claims 1-6, wherein the at least one expanded screen (61, 62) has a bent shape from its first peripheral edge (61 a, 62a) towards its second peripheral edge (61 b, 62b).

8. Gas flow control arrangement according to any of claims 4-7 wherein the first expanded screen (61) and the second expanded screen (62) are arranged to a common axis (63) substantially in a transverse duct plane (A) within the duct (20), with first and second expanded screens forming a screen pair (60).

9. Gas flow control arrangement according to claim 8, wherein the gas flow control arrangement further comprises a plurality of said screen pairs (60, 70), wherein the screen pairs are arranged substantially in parallel in the transverse duct plane of duct (20).

10. Gas flow control arrangement according to any of claims 1-6, wherein the at least one expanded screen has a straight shape from its first peripheral edge (81a, 82a) towards its second peripheral edge (81b, 82b).

11. Gas flow control arrangement according to any of the claims 4-5 and claim 10, wherein the gas flow control device further comprises a third expanded screen (83) and a fourth expanded screen (84) positioned a distance downstream with respect to the flow of process gas from the first and second expanded screens, the third and fourth expanded screens each with second peripheral edges (83b, 84b) positioned at relatively the same point within the duct (20), and opposed first peripheral edges (83a, 84a) positioned apart from one another, the first peripheral edges (83a, 84a) being upstream with respect to the flow of process gas from the second peripheral edges (83b, 84b).

12. An exhaust gas cleaning system (25) for an industrial process plant, such as a fossil-fueled power plant or a waste incineration plant, the system comprising:
a gas cleaning device (24),
a hollow inlet duct (18, 20, 22) fluidly connected to the gas cleaning device, to channel a flow of process gases to the gas cleaning device,
a hollow outlet duct (30) fluidly connected to the gas cleaning device, to channel flowing process gases cleaned in the gas cleaning device out from the gas cleaning device,
**characterized in that** that a gas flow control arrangement according to any of claims 1-11 is positioned in the inlet duct (18, 20, 22).

13. Exhaust gas cleaning system according to claim 12, further comprising an ammonium injection grid (50) for injecting ammonium into a process gas flowing through inlet duct (18, 20, 22), with the gas flow control arrangement arranged downstream of the ammonium injection grid (50).

14. Exhaust gas cleaning system according to claim 12 or 13, further comprising a hollow bypass duct (40) fluidly connected to the inlet duct (18, 20, 22) and to the outlet duct (30), for use in diverting process gases past gas cleaning device (24), wherein the gas flow control arrangement is arranged at the bypass duct (40) connection to the inlet duct (18, 20, 22).

15. Method for controlling gas flow in an exhaust gas cleaning system comprising:
channeling gas flow through a duct (20) from its first end (20a) towards its second end (20b) along the longitudinal expanse of the duct, using at least one expanded screen (61, 62, 81, 82) arranged in the duct (20), the expanded screen having a screen plane (P) forming an angle (α) with respect to transverse duct plane (A), to distribute gas flow.
